**Europäisches Patentamt**

**European Patent Office**

**Office européen des brevets**

(11) Publication number: **0 171 266**
**B1**

(12) **EUROPEAN PATENT SPECIFICATION**

(45) Date of publication of patent specification: **02.01.91**

(21) Application number: **85305502.8**

(22) Date of filing: **01.08.85**

(51) Int. Cl.⁵: **G 11 B 5/588**

(54) Recording digital information signals.

(30) Priority: **06.08.84 JP 164653/84**

(43) Date of publication of application:
**12.02.86 Bulletin 86/07**

(45) Publication of the grant of the patent:
**02.01.91 Bulletin 91/01**

(84) Designated Contracting States:
**AT BE CH DE FR GB IT LI NL SE**

(56) References cited:
**EP-A-0 113 986**
**EP-A-0 138 210**
**EP-A-0 150 992**

**PATENT ABSTRACTS OF JAPAN, vol. 8, no.
208(P-302)1645r, 21th September 1984; JP - A -
59 092460 (SANSUI DENKI K.K.) 28-05-1984;
(Cat. A)**

**PATENT ABSTRACTS OF JAPAN, vol. 8, no. 133
(P-281)1570r; JP - A - 59 036 358 (MATSUSHITA
DENKI SANGYO K.K.) 28-02-1984; (Cat. A)**

(73) Proprietor: **SONY CORPORATION
7-35 Kitashinagawa 6-Chome Shinagawa-ku
Tokyo 141 (JP)**

(72) Inventor: **Odaka, Kentaro c/o Sony Corporation
Patents Division 6-7-35 Kitashinagawa
Shinagawa-ku Tokyo 141 (JP)**
Inventor: **Sugiki, Hiraku c/o Sony Corporation
Patents Division 6-7-35 Kitashinagawa
Shinagawa-ku Tokyo 141 (JP)**
Inventor: **Ohmura, Yoshimoto c/o Sony
Corporation
Patents Division 6-7-35 Kitashinagawa
Shinagawa-ku Tokyo 141 (JP)**
Inventor: **Ohmori, Takashi c/o Sony
Corporation
Patents Division 6-7-35 Kitashinagawa
Shinagawa-ku Tokyo 141 (JP)**
Inventor: **Yamada, Makoto c/o Sony
Corporation
Patents Division 6-7-35 Kitashinagawa
Shinagawa-ku Tokyo 141 (JP)**

(74) Representative: **Thomas, Christopher Hugo
et al
D Young & Co 10 Staple Inn
London WC1V 7RD (GB)**

**Description**

This invention relates to methods of and apparatus for recording digital information signals and to apparatus for reproducing digital information signals and, more particularly, to control of the tracking alignment of rotary heads during playback.

When a video signal and an audio signal are recorded on a magnetic tape using a helical-scan rotary head to form oblique tracks, it is known for the video signal and the audio signal to be recorded and reproduced in pulse code modulated (PCM) form, as this enables high quality recording and reproducing to be achieved.

In this case, tracking control for controlling the rotary head accurately to trace the recorded tracks upon playback is typically carried out by using a control signal that has been recorded by a fixed head along one edge of the magnetic tape in its width direction. This control signal is reproduced by the fixed head in the reproduction mode, and the reproduced control signal and the rotary phase of the rotary head are maintained in constant phase relation.

This known tracking control method requires the use of a special fixed magnetic head, which is a disadvantage in compact equipment, because it requires its own mounting space in the recording and reproducing apparatus.

One approach to overcoming the use of the fixed head is a proposed tracking control method that does not use a fixed magnetic head, but uses only the reproduced output signal from the rotary magnetic head to carry out the tracking control for the rotary head. Such a tracking control method is disclosed in, for example, our European patent specification EP-A1-0 113 986. This tracking control method relies upon the fact that it is easy to time-compress and time-expand the PCM signal, and hence it is not necessary to record and reproduce the PCM signal continuously in time, unlike an analog signal. Hence, the PCM signal and another signal can easily be recorded on separate regions of each of the plurality of oblique tracks formed during recording.

When the PCM signal is time-compressed and magnetically recorded on a record medium by a plurality of rotary heads to form the oblique tracks with no guard bands between adjacent tracks, a plurality of tracking control pilot signals are recorded in the longitudinal direction in each track to form a record region independent from the record region for the PCM signal. Upon playback, the recorded track is traced by a rotary head having a tracing width greater than the track width, and the tracking of the rotary head is controlled by the pilot signals reproduced from the tracks adjacent to the track being traced by the rotary head.

As a reference signal for recording and reproducing the tracking control pilot signal, a pulse signal (PG) having a frequency of 30 Hz (in a 30 field per second television system) is used that is indicative of the rotary phase of the head, and that is generated in synchronism with the rotation of the motor that drives the rotary head.

Nevertheless, during playback when the pulse signal PG is used as a position detecting reference when the tracking pilot signal is reproduced, the reference position of the pulse signal PG may be altered or displaced due to mechanical or electrical variations in the parameters of the apparatus, caused, for example, by changes in temperature, and such variations appear as a kind of tracking error constant (offset) upon playback.

As a result, upon playback, it becomes difficult to reproduce the tracking pilot signal with the same timing as that which was present during recording, and control of the rotary head becomes imprecise. This causes the particular disadvantage that it becomes impossible to achieve compatibility between individual units of the same kind of apparatus.

Moreover, because the sampling pulse that is used to reproduce the tracking pilot signal over one rotational period of the rotary head is formed with the pulse signal PG as a reference, the amount of error present therein becomes integrated, so as to be increased by so-called jitter, and the position of the sampling pulse is displaced in time.

To remove such shortcoming, we have previously proposed a method and apparatus which are disclosed in our EP patent specification EP-A2-0 150 992 (EPC Article 54(3)), in which an erase signal is recorded at the position corresponding to the centre of adjacent tracking pilot signals. Upon playback, a sampling pulse is generated in response to this erase signal, the tracking pilot signals reproduced from the adjacent track is sampled by the sampling pulses generated, the level thereof is compared, and a tracking signal for a rotary head is generated on the basis of a compared output.

According to the present invention there is provided a method of recording digital signals on a record medium using a rotary head that periodically traces the record medium, the method comprising:

recording a digital information signal at first predetermined areas in a plurality of oblique tracks formed on said record medium by said rotary head and forming the tracks by said rotary head with no guard bands between adjacent tracks;

determining second predetermined areas proximate to the ends of the tracks and differing from said first predetermined areas;

recording a tracking pilot signal in said second predetermined areas on the tracks, whereby said tracking pilot signal is available for controlling tracking alignment of a playback head during reproduction of said information signal; and

determining predetermined positions in said second areas corresponding substantially to a centre portion of said pilot signal on an adjacent track;

characterized by:

recording a position detecting signal of a first frequency having first and second recording lengths alternately at said predetermined position in said second predetermined areas in every other one of the tracks, and a position detecting signal of a second frequency having first and second recording lengths alternately at said predetermined position in said second predetermined area in each track not having said position detecting signal of said first frequency, said position detecting signals indicating the position of the respective said pilot signal on an adjacent track.

According to the present invention there is also provided an apparatus for recording digital signals on a record medium using a rotary head that periodically traces the record medium, the apparatus comprising:

means for recording a digital information signal at first predetermined areas in a plurality of oblique tracks formed on said record medium by said rotary head and forming the tracks by said rotary head with no guard bands between adjacent tracks;

means for determining second predetermined areas proximate to the end of the tracks and differing from said first predetermined areas;

means for recording a tracking pilot signal in said second predetermined areas on the tracks, whereby said pilot signal is available for controlling tracking alignment of a playback head during reproduction of said information signal;

means for determining predetermined positions in said second areas corresponding substantially to a centre portion of said pilot signal on an adjacent track;

characterized by:

means for recording a position detecting signal of a first frequency having respective first and second recording lengths at said predetermined position in said second predetermined areas in every other of the tracks alternately, and means for recording a position detecting signal of a second frequency having respective first and second recording lengths at said predetermined position in said second predetermined areas in each track not having said position detecting signal of said first frequency, said position detecting signals indicating the position of the respective said pilot signal on an adjacent track.

According to the present invention there is also provided an apparatus for reproducing digital information signals recorded on a record medium using a rotary head that periodically traces the record medium, the apparatus comprising:

means for reproducing a digital information signal recorded in first areas of a plurality of contiguous respective oblique tracks formed on said record medium without guard bands between adjacent said oblique tracks;

characterized by:

means for reproducing a tracking pilot signal recorded in second areas proximate the ends of said respective oblique tracks and different from said first areas;

means for reproducing a plurality of position detecting signals respectively having various recording lengths recorded at locations each having a predetermined relation to a different reference position corresponding substantially to a centre portion of said pilot signal as recorded on an adjacent track;

means for generating sampling pulses in response to said reproduced position detecting signals;

means for sampling said reproduced tracking pilot signal as reproduced from said tracks adjacent to said track being traced and for comparing the levels thereof;

means for generating a tracking signal in response to said comparison; and

means for controlling a tracking alignment of said head in response to said tracking signal.

The invention will now be described by way of example with reference to the accompanying drawings, throughout which like parts are referred to by like references, and in which:

Figure 1 is a block diagram showing an embodiment of recording apparatus according to the invention;

Figure 2 is a diagram showing an example of a rotary head assembly used in the embodiment of Figure 1;

Figure 3 is a representation of a track pattern recorded on a record medium;

Figures 4A to 4J are signal waveforms used in explaining the recording operation of the embodiment of Figure 1;

Figures 5A to 5H are signal waveforms used in explaining the playback operation of the embodiment of Figure 1;

Figure 6 is a circuit diagram showing an example of a part of the embodiment of Figure 1;

Figures 7A to 7K are signal waveforms used in explaining the operation of the circuit of Figure 6; and

Figure 8 is a flow chart used in explaining the generation of a second sampling pulse.

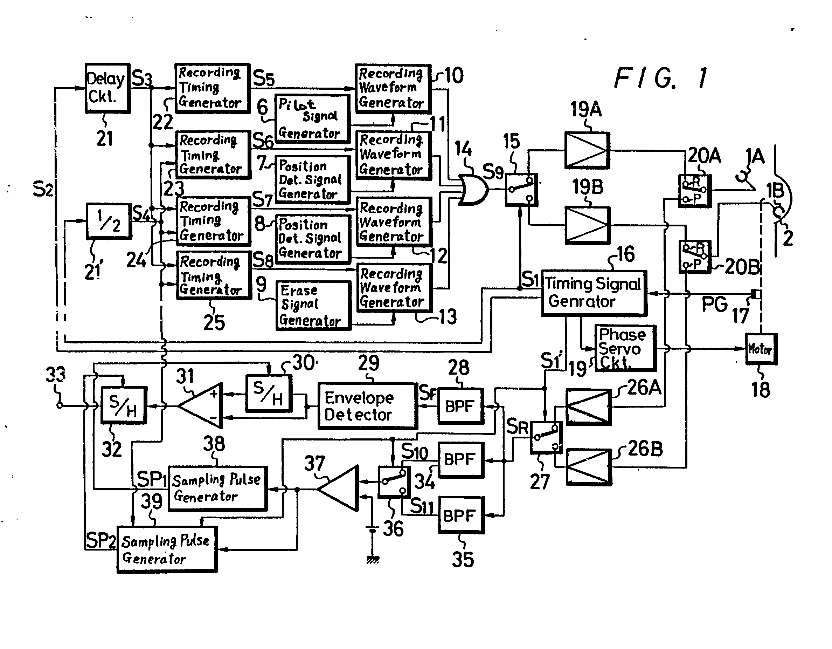

Figure 1 schematically shows a circuit arrangement of an embodiment of apparatus for recording a digital information signal and according to the present invention, in which only the parts of the circuit that are directly concerned with the present invention and that record and reproduce a tracking pilot signal, a position detecting signal and an erase signal, are shown. In this embodiment, the tracking pilot signal and the erase signal are recorded and reproduced in the normal playback mode, as well as in a variable tape speed playback mode, such as when the tape speed is two or three times the normal tape speed. Thus, the circuit arrangement for recording and reproducing the information signal, such as a PCM signal, for example, is omitted, because they form no part of the present invention.

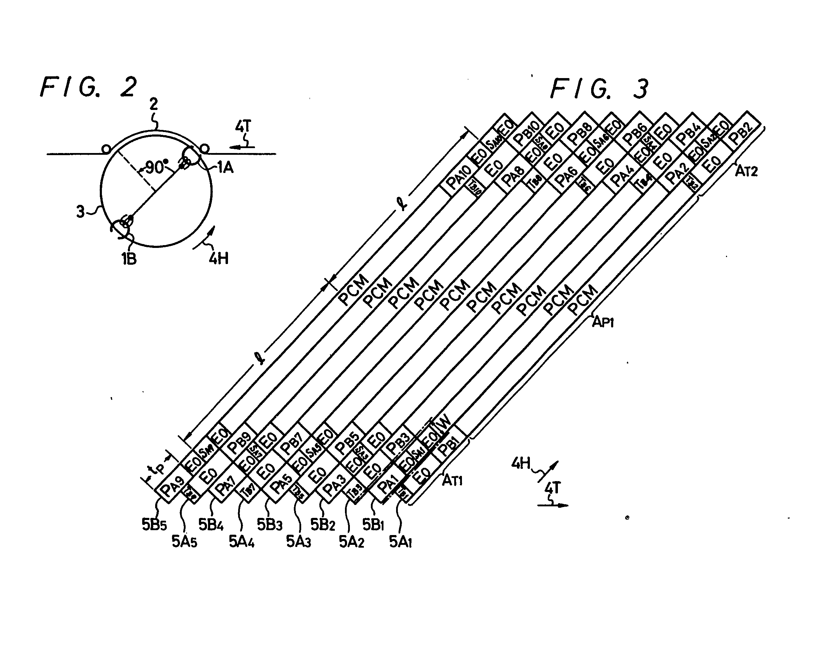

Referring to Figure 1, rotary heads 1A and 1B are arranged in contact with a magnetic tape 2, which is used as the recording medium, and the rotary heads 1A and 1B are mounted on the periphery of a tape guide drum 3 and separated by an equal angular distance, namely, 180°, as shown in Figure 2. In this embodiment, the tape 2 is wrapped around the outside of tape guide drum 3 at its peripheral portion over an angular distance of less than 180°, for example, an angular distance of 90°. The heads 1A and 1B are rotated at 30 revolutions per second (in a 30 field per second television system) in the direction shown by an arrow 4H, and the tape 2 is driven in the direction shown by an arrow 4T at a predetermined speed, so that oblique magnetic tracks 5A and 5B are respectively formed on the tape 2 one by one by the rotary heads 1A and 1B in a so-called overlapped writing state, as shown in Figure 3. That is, the width (tracing width) W of the head gap is selected to be greater than the track width. In this case, the width directions of the gaps of the rotary heads 1A and 1B are made different from each other relative to the direction perpendicular to their tracing direction. In other words, the so-called azimuth angles of the heads 1A and 1B are selected to be different from each other to take advantage of the azimuth effect to cancel cross-talk.

It then follows that there occurs a period in which neither of the two heads 1A and 1B are in contact with the tape 2, and this period corresponds to an angular range of 90° in this embodiment. If this non-contact period is used to perform the addition of redundant data during recording, and to perform error correction and the like during playback, it is possible to simplify the system.

Referring back to Figure 1, a pilot signal oscillator or generator 6 produces a tracking pilot signal P, which has a frequency fo selected to be, for example, about 200 KHz, and is recorded at a relatively high level. If the linearity between tracking phase displacement and a reproduced pilot signal output is ensured, the frequency fo of the tracking pilot signal P is desired to be a frequency presenting a relatively small amount of azimuth loss.

Position detecting signal generators 7 and 8 produce position detecting signals S and T that will detect the position of the pilot signal P. These position detecting signals S and T are also used as an erase signal for the pilot signal P. This is because when new information is recorded on a tape 2 on which information was previously recorded, that previously recorded information being at the same time erased, it is not necessarily the case that the record tracks are identical in location to the previous corresponding record tracks, so the previously recorded pilot signal must be erased. The frequencies f1 and f2 of the position detecting signals S and T are selected to be substantially different from the frequency fo of the pilot signal P, for example, about 700 kHz and 500 kHz, respectively. Also the recording levels thereof are selected to be such as in practice to erase the pilot signal P.

An oscillator or generator 9 generates an erase signal EO. In this case, it is preferable that the erase signal EO is high in erase ratio relative to the signals P, S and T, when the pilot signal P and the position detecting signals S and T are written in an overlapping writing state. The frequency f3 of the erase signal EO is selected to be about 2 MHz.

Recording waveform generators 10, 11, 12 and 13 respond to an edge portion, for example, a trailing edge, of a delay signal associated with a pulse PG, which will be described in detail in the following, and produces signals as follows. The recording waveform generator 10, on the basis of the pilot signal P from the pilot signal generator 6, produces the pilot signals which are arranged with a predetermined time interval tp (tp represents the recording time interval of the pilot signal and so on) in accordance with the number of pilot signals P to be recorded per track and the arrangement thereof in the track with a predetermined interval. The recording waveform generators 11, 12 and 13, on the basis of the position detecting signals S and T, and the erase signal EO from the generators 7, 8 and 9, produce the position detecting signals and the erase signal each of which is arranged with a predetermined time interval in accordance with the number of the position detecting signals and the erase signal recorded per track and the arrangement thereof in the track with a predetermined interval. An OR gate circuit 14 is provided logically to process the outputs from the generators 10 to 13.

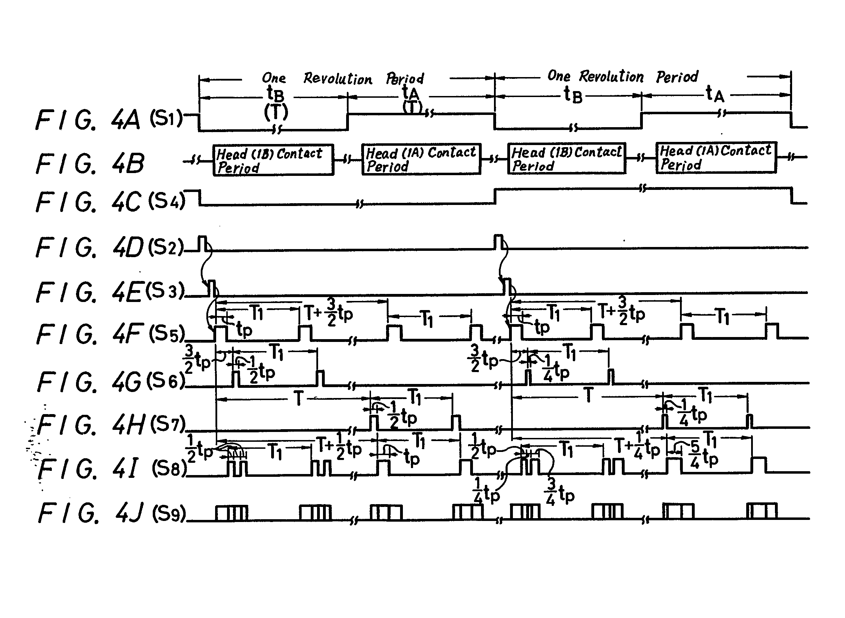

A switching circuit 15 is provided to change over the heads 1A and 1B, and is changed in position by a switching signal S1 (Figure 4A) derived from a timing signal generator 16. The timing signal generator 16 is supplied with a pulse PG with a frequency of 30 Hz, which is indicative of the rotary phase of the heads 1A and 1B, from a pulse generator 17 in synchronism with the rotation of a motor 18 that drives the heads 1A and 1B. The pulse signal with a frequency of 30 Hz from the timing signal generator 16 derived from the pulse signal PG, is supplied to a phase servo circuit 19 that produces a servo output by which the rotary phase of the motor 18 is controlled.

The signals from the switching circuit 15, which is changed in position by the switching signal S1 from the timing signal generator 16, are amplified by an amplifier 19A or 19B and then supplied through a contact R of a switching circuit 20A or 20B to the head 1A or 1B, and thereby recorded on the tape 2. The switching circuits 20A and 20B are connected to the contact R upon recording, whereas they are connected to the contact P upon playback.

An output signal S2 (Figure 4D) from the timing signal generator 16 is supplied to a delay circuit 21 in which it is delayed with a delay time corresponding to the interval between the heads 1A and 1B, and the mounting position of the pulse generator 17. A delayed output signal S3 (Figure 4E) from the delay circuit 21 is fed to each of recording timing generators 22 to 25. The switching signal S1 from the timing signal generator 16 is frequency-divided by two by a frequency divider 21' to become a signal S4 (Figure 4C), which then is fed to the recording timing generators 23 to 25. The recording timing generators 22 to 25 generate timing signals which are used as recording references for the pilot signal and the like. In this case, the trailing edge of the signal S3 (Figure 4E) delayed by the delay circuit 21 is made coincident with the time at which the first head 1A or 1B comes into contact with the tape 2 during one rotation period.

The recording timing generator 22 produces a pulse signal S5 (Figure 4F) comprising pulses synchronized relative to the trailing edge of the signal S3 during the half rotation periods of one head 1A or 1B, for example, the half rotation periods of the head 1B, and pulses delayed by a time $T + 3tp/2$ ($T$ represents the time corresponding to the half rotation periods of the head 1B) relative to the trailing edge of the signal S3 during the half rotation periods of the other head 1A. Within each half rotation period there is a predetermined interval T1 between these pulses, and the durations of the pulses are tp.

The recording timing generator 23 generates a pulse signal S6 (Figure 4G) comprising pulses delayed by a time $3tp/2$ relative to the trailing edge of the signal S3 only during the half rotation periods of one head 1A or 1B, for example, during only the half rotation periods of the head 1B. There is a predetermined interval T1 between these pulses and, for example, during the odd rotation periods of the head 1B, the durations of the pulses are $tp/2$, while during the even rotation periods of the head 1B, the durations of the pulses are $tp/4$.

The recording timing generator 24 generates a pulse signal S7 (Figure 4H) delayed relative to the trailing edge of the signal S3 by a time T, only during the half rotation periods of the other head 1A or 1B, for example, only the half rotation periods of the head 1A. There is a predetermined interval T1 between these pulses, and where the durations of the pulses are $tp/2$ during the odd rotation periods of the head 1A, the durations of the pulses are $tp/4$ during the even rotation periods of the head 1A.

The recording timing generator 25 generates the following signal S8. That is, in the odd rotation periods and during the half rotation period of the head 1B, there is generated a pair of pulses which are delayed by a time tp relative to the trailing edge of the signal S3 with an interval of time $tp/2$ therebetween and at a predetermined interval T1 between pairs of pulses. Each of the pulses has a duration of $tp/2$. During the other half rotation period of the other head 1A, there is generated a pulse signal comprising pulses of duration tp delayed by a time $T + tp/2$ relative to the trailing edge of the signal S3. There is a predetermined interval T1 between these pulses. On the other hand, in the even rotation periods during the half rotation period of the head 1B, there is generated a pair of pulses which are delayed by a time $tp/2$ relative to the trailing edge of the signal S3, whose durations are respectively $tp/2$ and $3tp/4$, and which have an interval $tp/4$

therebetween, and a predetermined interval T1 between the pulses of each pair of pulses. During the half rotation period of the other head 1A, there is generated a pulse signal comprising pulses delayed by a time $T + tp/4$ relative to the trailing edge of the signal S3. The durations of these pulses are $5tp/4$, and they are at a predetermined interval T1 (Figure 4I).

The signal S5 (Figure 4F), the signal S6 (Figure 4G), the signal S7 (Figure 4H) and the signal S8 (Figure 4I) from the recording timing generators 22, 23, 24 and 25 are respectively supplied to the recording waveform generators 10, 11, 12 and 13 as their gate signals so that the pilot signal P, the position detecting signals S and T, and the erase signal EO from the generators 6, 7, 8 and 9 are respectively supplied through the recording waveform generators 10, 11, 12 and 13 to the OR gate circuit 14 as shown in Figure 1. Thus, they are developed at the output side thereof as a composed signal S9 (Figure 4J).

In Figure 1, amplifiers 26A and 26B are respectively supplied with the playback outputs from the corresponding heads 1A and 1B when the switching circuits 20A and 20B are changed in position to their contacts P upon playback. The respective outputs of the amplifiers 26A and 26B are supplied to a switching circuit 27. The switching circuit 27 is alternately changed in position by a switching signal S'1 (Figure 5A) of 30 Hz from the timing signal generator 16 during the half rotation period including the tape contact period of the head 1A and during the half rotation period including the tape contact period of the head 1B similarly to the recording mode, respectively.

A band-pass filter 28 of a narrow band having a centre pass frequency fo is provided to derive only the pilot signal P from the reproduced output of the switching circuit 27. An envelope detector 29 is provided to envelope-detect the output from the band-pass filter 28 and the output from the envelope detector 29 is sampled and then held by a sample-and-hold circuit 30. A comparator or differential amplifier 31 is provided to compare the outputs from the envelope detector 29 and the sample-and-hold circuit 30. A sample-and-hold circuit 32 is provided to sample and hold the compared error signal from the differential amplifier 31. The sample-and-hold circuits 30 and 32 function to sample and hold across-talk component of the pilot signals recorded on both end portions of the tracks adjacent to the track being traced upon normal playback mode as will be described later. Then, the output from the sample-and-hold circuit 32 is supplied to an output terminal 33 as a tracking control signal.

In order to form the sampling pulse and the like for the sample-and-hold circuits 30 and 32, band-pass filters 34 and 35 of narrow band having centre pass frequencies f1 and f2 are provided at the output side of the switching circuit 27 which derive only the position detecting signals S and T from the reproduced output. Outputs S10 (Figure 5E) and S11 (Figure 5F) thereof are supplied through a switching circuit 36 to a comparator 37 which serves as a waveform shaping circuit. Similarly to the switching circuit 27, the switching circuit 36 is changed in position by the switching signal S'1 of 30 Hz from the timing signal generator 16.

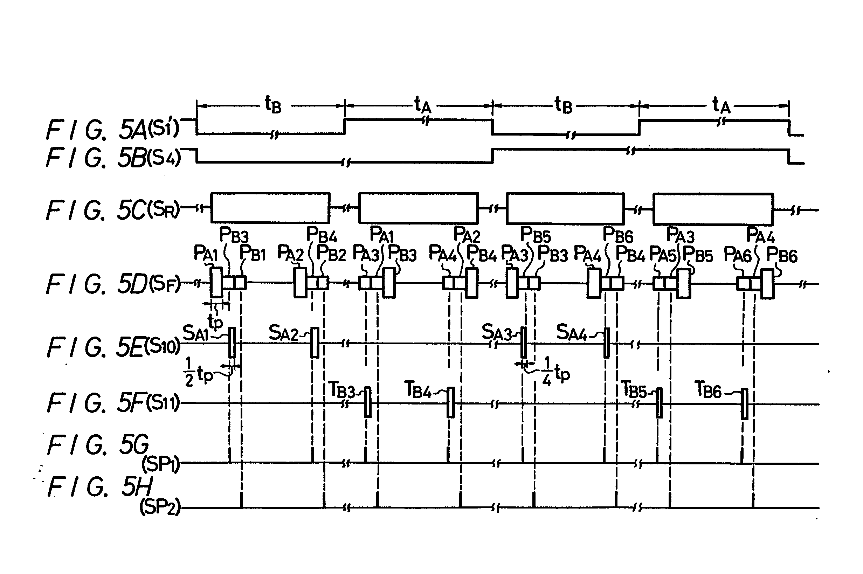

Sampling pulse generators 38 and 39 are provided at the output side of the comparator 37. The sampling pulse generator 38 generates a first sampling pulse SP1 (Figure 5G) in synchronism with the leading edge of the output from the comparator 37, whereas the sampling pulse generator 39 generates a second sampling pulse SP2 (Figure 5H) with the delay of a predetermined time tp after the first sampling pulse SP1 was produced. These sampling pulses SP1 and SP2 are supplied to the sample-and-hold circuits 30 and 32, respectively.

Next, the circuit operation of Figure 1 will be described with reference to the signal waveforms shown in Figures 4 to 5.

Upon recording, in response to the pulse PG indicative of the rotary phases of the heads 1A and 1B derived from the pulse generator 17, the timing signal generator 16 produces the signal S2 shown in Figure 4D. The signal S2 is supplied to and delayed by a predetermined time by a delay circuit 21 and so the delay circuit 21 produces the signal S3 shown in Figure 4E. The signal S3 is supplied to the recording timing generators 22 to 25 so that the recording timing generator 22 produces at its output the signal S5 shown in Figure 4F. The switching signal S1 from the timing signal generator 16 is supplied to the frequency divider 21' so that the frequency divider 21' produces the signal S4 shown in Figure 4C. The signal S4 is supplied to the recording timing generators 23 to 25 whereby in response to the signals S3 and S4, the recording timing generators 23 to 25 produce the signals S6 to S8 shown in Figures 4G to 4I, respectively.

The signals S5, S6, S7 and S8 are respectively supplied to the recording waveform generators 10, 11, 12 and 13. Thus, the recording waveform generator 10 passes therethrough in synchronism with the signal S5 supplied thereto the pilot signal P from the pilot signal generator 6 at a predetermined interval and for a predetermined time tp as shown in Figure 4F, the recording waveform generator 11 passes therethrough in synchronism with the signal S6 supplied thereto the position detecting signal S from the sync generator 7 at a predetermined interval and for a predetermined time as shown in Figure 4G, the recording waveform generator 12 passes therethrough in synchronism with the signal S7 supplied thereto the position detecting signal T from the sync generator 8 at a predetermined interval and for a predetermined time as shown in Figure 4H, and the recording waveform generator 13 passes therethrough in synchronism with the signal S8 supplied thereto the erase signal EO from the sync generator 9 at a predetermined interval and for a predetermined time as shown in Figure 4I.

The output signals from the recording waveform generators 10 to 13 are added together by the OR circuit 14 which then produces the signal S9 shown in Figure 4J.

At this time, let it be considered that for example, the head 1B records the track 5B1 in Figure 3 (in the first half period tB of Figure 4). Then, the first and second pulses of the signal S5 in Figure 4F correspond to the pilot signals PA1 and PA2, respectively, the first and second pulses of the signal S6 in Figure 4G correspond to the position detecting signals SA1 and SA2, respectively, and the first and second pulses formed of a pair of pulses of the signal S8 in Figure 4I correspond to the erase signals EO which are adjacent to the two sides of the position detecting signals SA1 and SA2, respectively. Accordingly, the composed signals of the signals corresponding to the alignments of these signals, namely, PA1, EO, SA1, EO and PA2, EO, SA2 and EO are produced at each group at the output side of the OR circuit 14.

Let it be considered that for example, the head 1A records the track 5A2 in Figure 3 (in the first half period tA of Figure 4). Then, the first and second pulses of the signal S5 in Figure 4F respectively correspond to the pilot signals PB3 and PB4, the first and second pulses of the signal S7 in Figure 4H respectively correspond to the position detecting signals TB3 and TB4, and the first and second pulses of the signal S8 in Figure 4I respectively correspond to the erase signals EO which are adjacent to the side of the position detecting signals TB3 and TB4. Then, the composed signals of the signals corresponding to the alignments of these signals, namely, TB3, EO, PB3 and PB4, EO and PB4 are produced in each group at the output side of the OR circuit 14.

Further, let it be considered that for example, the head 1B records the track 5B2 in Figure 3 (the second half period tB of Figure 4). The first and second pulses of the signal S5 in Figure 4F respectively correspond to the pilot signals PA3 and PA4, the first and second pulses of the signal S6 in Figure 4G respectively correspond to the position detecting signals SA3 and SA4, and the first and second pulse formed of a pair of pulses of the signal S8 in Figure 4I respectively correspond to the erase signals EO which are adjacent to the respective sides of the position detecting signals SA3 and SA4. The composed signals of the signals corresponding to the alignment of these signals, namely, PA3, EO, SA3 and EO, and PA4, EO, SA4 and EO are produced at each group at the output side of the OR circuit 14.

Furthermore, let it be considered that for example, the head 1A records the track 5A3 in Figure 3 (the second half period tA of Figure 4). Then, the first and second pulses of the signal S5 in Figure 4F correspond to the pilot signals PB5 and PB6, respectively, the first and second pulses of the signal S7 in Figure 4H respectively correspond to the position detecting signals TB5 and TB6, and the first and second pulses of the signal S8 in Figure 4I respectively correspond to the erase signals EO which are adjacent to the sides of the position detecting signals TB5 and TB6. The composed signals of the signals corresponding to the alignments of these signals, namely, TB5, EO and PB5 and TB6, EO and PB6 are produced at each group at the output side of the OR circuit 14.

On the other hand, from the timing signal generator 16, there is produced the switching signal S1 as shown in Figure 4A in response to the pulse PG from the pulse generator 17. The signal S1 is in synchronism with the rotation of the heads 1A and 1B so that as shown in Figures 4A and 4B, during the half rotation period tA of the head 1A in which the signal S1 is at high level, the head 1A comes into contact with the tape 2, while during the half rotation period tB in which the signal S1 is at low level, the head 1B comes into contact with the tape 2. Then, the switching circuit 15 is changed in position by the switching signal S1 to the state shown in Figure 1 during the period tA, while it is changed in position to the state opposite to that shown in the figure during the period tB, thus the head 1A, 1B is changed over.

Accordingly, when the switching circuit 15 is in the position opposite to that shown in Figure 1, the signal S9 obtained from the OR circuit 14 is supplied through the amplifier 19B and the contact R of the switching circuit 20B to the head 1B, whereby at the beginning and the end of the contact period of the head 1B with the tape 2 within the period tB and in record regions AT1 and AT2 for the tracking signal provided at the two end portions of the track 5B in its longitudinal direction distant from the centre position of the track 5B in its longitudinal direction by an equal length l, the signal S9 is recorded in the odd rotation period of the head 1B (the first half period tB of Figure 4) for a time:

tp + tp/2 + tp/2 + tp/2 and a time tp + tp/2 + tp/2 + tp/2,

while it is recorded thereon in the even rotation period of the head 1B (the second half period tB of Figure 4), for a time:

tp + tp/2 + tp/4 + tp/2 and a time tp + tp/2 + tp/4 + tp/2, respectively.

On the other hand, when the switching circuit 15 is in the state as shown in Figure 1, the signal S9 is supplied through the amplifier 19A and the contact R of the switching circuit 20A to the head 1A, whereby at the beginning and the end of the contact period of the head 1A with the tape 2 within the period tA and in the similar regions AT1 and AT2 provided in the two end portions of the track 5A in its longitudinal direction distant from the central position of the track 5A in its longitudinal direction by the equal distance l, the signal S9 is recorded in the odd rotation period (the first half period tA of Figure 4) of the head 1A for the time:

tp/2 + tp + tp and a time tp/2 + tp + tp,

while it is recorded in the even rotation period (the second half period tA of Figure 4) of the head 1A, for a time:

tp/4 + 5tp/4 + tp and a time tp/4 + 5tp/4 + tp, respectively.

In other times than those within which these pilot signals, the position detecting signals and the erase signals are recorded, although not shown, an audio PCM signal of one segment portion to be recorded as one track is supplied through the amplifier 19A to the head 1A during the period tA, while it is supplied through the amplifier 19B to the head 1B during the period tB so that they are recorded on the record region Ap1 other than the record regions of the above-described pilot signals of the respective tracks 5A and 5B.

The reproduction of the signals recorded as described above will now be described.

Also in this playback mode, the motor 18 is applied with the phase servo from the phase servo circuit 19 similarly to the recording mode.

The signals reproduced from the tape 2 by the heads 1A and 1B are respectively supplied through the contact P of the switching circuit 20A and the amplifier 26A and the contact P of the switching circuit 20B and the amplifier 26B to the switching circuit 27. The switching circuit 27 is alternately changed over by the switching signal S'1 of 30 Hz as shown in Figure 5A from the timing signal generating circuit 16 at the half rotation period tA including the tape contact period of the head 1A and at the half rotation period tB including the tape contact period of the head 1B similarly to the recording mode. Accordingly, from the switching circuit 27 there is derived an intermittent PCM signal SR of one segment each as shown in Figure 5C. Then, although not shown this PCM signal SR is supplied to a playback processor thereby to be demodulated to the original PCM signal and then further fed to a decoder in which a data of each block is detected by the block synchronizing signal, corrected for error and de-interleaved and then reconverted to the analog audio signal by a digital-to-analog converter and then fed to an output.

The tracking control will be carried out as follows.

If, now, the head 1B traces the range of a tracing width W including the track 5B1 as shown by one-dot chain lines in Figure 3, the head 1B traces also the tracks 5A2 and 5A1 which are adjacent to the track 5B1 so that as shown in Figure 3, in the region AT1, the pilot signal PA1 of the track 5B1, the pilot signal PB3 of the adjacent track 5A2 and the pilot signal PB1 of the adjacent track 5A1 are reproduced by the head 1B, while in the region AT2, the pilot signal PA2 of the track 5B1, the pilot signal PB4 of the track 5A2 and the pilot signal PB2 of the adjacent track 5A1 are reproduced by the head 1B, respectively. At this time, the reproduced output of the head 1B derived from the switching circuit 27 is supplied to the band-pass filter 28 of narrow pass band having the pass centre frequency fo, which passes therethrough only the pilot signals as its output SF as shown in Figure 5D, and this output signal SF is fed to the envelope detector 29.

The output SR of the switching circuit 27 is also supplied to the bandpass filters 34 and 35 of narrow pass bands having pass centre frequencies f1 and f2, which pass therethrough the position detecting signals S10 and S11 as shown in Figures 5E and 5F, respectively. The signals S10 and S11 are respectively supplied to the switching circuit 36 from which the signal S10 is derived when the switching signal S'1 is at low level, and the signal S11 when it is at high level, which then are fed to the comparator 37.

The comparator 37 compares the signals S10 and S11 supplied thereto with a reference value, waveform-shapes them and supplies them to the sampling pulse generators 38 and 39. The sampling pulse generator 38 produces the first sampling pulse SP1 in synchronism with the rising edge of the waveform-shaped signal S10 as shown in Figure 5G and the first sampling pulse SP1 is supplied to the sample-and-hold circuit 30. At this time, as will be clear from Figure 5, the sampling pulse SP1 makes the sample-and-hold circuit 30 sample the cross-talk components of the pilot signals PB3 and PB4 of the adjacent track 5A2 at the side opposite to the transportation direction of the tape 2 shown by an arrow 4T (Figure 3) and the signal thus sampled is supplied to one input terminal of the differential amplifier 31 as the tracking signal of advanced phase.

After the time tp since the sampling pulse SP1 was produced, the cross-talk component of the pilot signals PB1 and PB2 of the adjacent track 5A1 at the side of the tape transport direction is supplied to the other input terminals of the differential amplifier 31 from the envelope detector 29 at the tracking signals of delayed phase, respectively. Accordingly, the differential amplifier 31 compares the tracking signals corresponding to the cross-talk components of the pilot signals PB3 and PB1, and PB4 and PB2, in turn.

Then, the compared error signal from the differential amplifier 31 is supplied to the sample-and-hold circuit 32 in which it is sampled by the sampling pulse SP2 produced from the sampling pulse generator 39 after the time tp since the sampling pulse SP1 was produced. Consequently, from the sample-and-hold circuit 32, the difference between the two inputs to the differential amplifier 31 is produced as the tracking control signal. This tracking control signal is supplied from the output terminal 33 to a capstan motor (not shown) which then controls the amount of the tape 2 transported. Thus, the head 1B is controlled such that the level difference between the two inputs to the differential amplifier 31 becomes zero or when the head 1B traces the track 5B1, the head 1B traces the two tracks 5A2 and 5A1 at each side of the track 5B1 by the same amount. In other words, the head 1B is controlled to trace the track 5B1 such that the central position of the width direction of the gap of the head 1B is made coincident with the centre of the track 5B1.

As to the other tracks, the heads 1A and 1B will be controlled similarly. For example, when the head 1A traces the track 5A2, there are obtained the cross-talk components of the pilot signals PA3 and PA4, and PA1 and PA2 of the adjacent tracks 5B2 and 5B1. Thus, the cross-talk components of the pilot signals PA3 and PA4 are sampled by the sampling pulse SP1 supplied from the sampling pulse generator 38 to the sample-and-hold circuit 30 thereby to produce the tracking signal. This tracking signal is supplied to the differential amplifier 31 at the next stage, and the output corresponding to the cross-talk components of the pilot signals PA1 and PA2 and derived from the envelope detector 29 is supplied to the differential amplifier 31 in which the tracking signals respectively corresponding to the cross-talk components between the pilot signals PA3 and PA1, and PA4 and PA2 are compared with one another. The compared error signal is sampled by the sampling pulse Sp2 which is supplied to the sample-and-hold circuit 32 so as to produce the tracking control signal for the head 1A.

Similarly, when the head 1B traces the track 5B2, as shown in Figure 3, the cross-talk components of the pilot signals PB5 and PB6 and PB3 and PB4 of the adjacent tracks 5A3 and 5A2 are produced. Thus, the cross-talk components of the pilot signals PB5 and PB6 are sampled by the sampling pulse SP1, the tracking signals corresponding to the cross-talk components of the pilot signals PB5 and PB3, and PB6 and PB4 are compared with one another by the differential amplifier 31. Finally, the compared error signal is sampled by the sampling pulse SP2 thereby to produce the tracking control signal for the head 1B.

Similarly, when the head 1A traces the track 5A3, as shown in Figure 3, the cross-talk components of the pilot signals PA5 and PA6, and PA3 and PA4 of the two adjacent tracks 5B3 and 5B2 are produced. Thus the cross-talk components of the pilot signals PA5 and PA6 are sampled by the sampling pulse SP1, and the tracking signals corresponding to the cross-talk components of the pilot signals PA5 and PA3, and PA6 and PA4 are controlled by the differential amplifier 31. Finally, the compared error signal is sampled by the sampling pulse SP2 thereby to produce the tracking control signal corresponding to the head 1A.

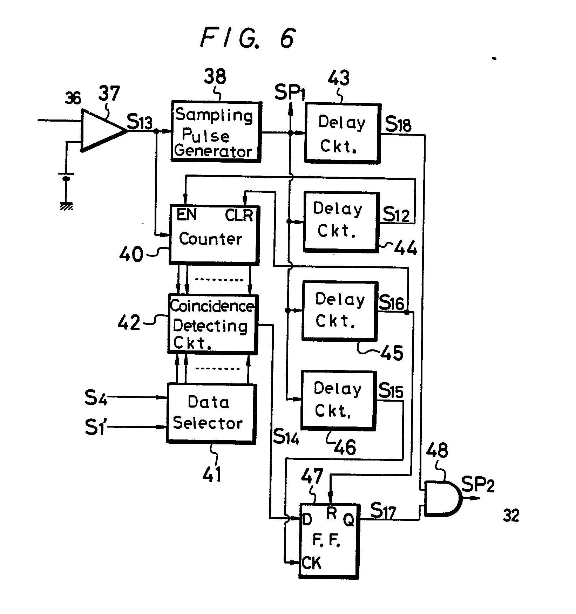

Figure 6 shows an example of a practical circuit arrangement of the sampling pulse generator 39 comprising a counter 40 for counting the pulses of the position detecting signal supplied thereto from the comparator 37. A data selector 41 is responsive to the signals S4 and S'1, and then selects the data (set values) of four kinds which are classified by the contents of the position detecting signals; namely, classified by the frequencies and the recording lengths of the position detecting signals S and T in this embodiment. A coincidence detecting circuit 42 detects whether the count value of the counter 40 coincides with the data of the data selector 41. As the coincidence detecting circuit 42, there is used, for example, a digital comparator.

Delay circuits 43 to 46 each derive a predetermined delay signal from the sampling pulse SP1. The counter 40 is enabled by the output from the delay circuit 44 and is then cleared by the output from the delay circuit 45. To an input terminal D of a flip-flop circuit 47, there is supplied the output from the coincidence detecting circuit 42. To a clock terminal CK of the flip-flop circuit 47, there is supplied the sampling pulse SP1 through the delay circuit 46, and to a reset terminal R thereof, there is supplied the output of the delay circuit 45.

To one input terminal of an AND circuit 48, there is supplied the output of the delay circuit 43, while to the other input terminal thereof, there is supplied the output developed at an output terminal Q of the flip-flop circuit 47. Then, the sampling pulse SP2 is produced at the output terminal thereof.

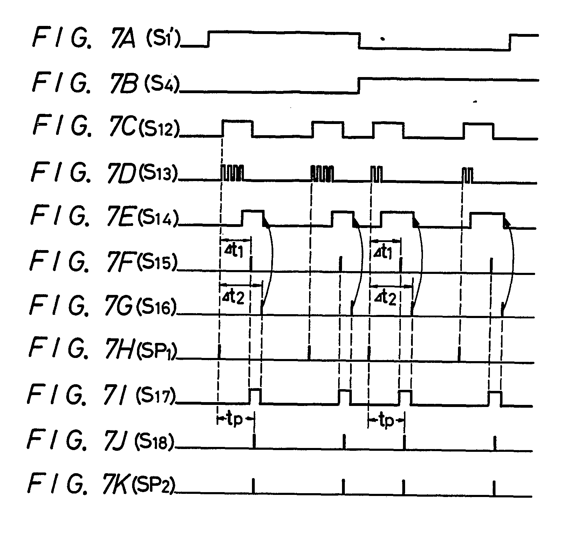

The operation of the sampling pulse generator 39 shown in Figure 6 will be described with reference to the signal waveform diagrams of Figure 7.

When a signal S13 as the position detecting signal, shown in Figure 7D is supplied from the comparator 37 to the sampling pulse generator 38, the sampling pulse generator 38 produces the sampling pulse SP1 in synchronism with the leading edge of the first pulse of the signal S13 shown in Figure 7H. The sampling pulse SP1 is supplied to the sample-and-hold circuit 30 (Figure 1) and also to the delay circuits 43 to 46.

The delay circuit 44 produces at its output side a signal S12 having a duration corresponding substantially to tp/2 in synchronism with the sampling pulse SP1 as shown in Figure 7C. The signal S12 is supplied to the counter 40 as the enable signal thereof.

The counter 40 counts the pulse of the signal S13 from the comparator 37 during the period in which the signal S12 is at high level. On the other hand, the data selector 41 responds to the signals $S'1$ and S4 which are respectively shown in Figures 7A and 7B and selects the data relating to the position detecting signal. If the selected data and the content of the counter 40 coincide with each other, the coincidence detecting circuit 42 produces at its output side a signal S14 which continues from the trailing edge of the final pulse of the signal S13 by a predetermined time as shown in Figure 7E. This signal S14 is supplied to the flip-flop circuit 47 as the data thereof.

The delay circuit 46 produces a signal S15 in synchronism with the sampling pulse SP1 with a delay of a predetermined time $\Delta t1$ therefrom as shown in Figure 7F. This signal S15 is supplied to the clock terminal CK of the flip-flop circuit 47, in which the signal S14 supplied to the input terminal D thereof is latched. In this case, the delay time $\Delta t1$ of the delay circuit 46 is selected to satisfy the condition tp is greater than $\Delta t1$ is greater than tp/2.

The delay circuit 45 produces a signal S16 in synchronism with the sampling pulse SP1 and after therefrom by a predetermined time $\Delta t2$ as shown in Figure 7G. This signal S16 is supplied to the counter 40 thereby to clear the content thereof and is also supplied to the flip-flop circuit 47 thereby to reset it. As a result, the flip-flop circuit 47 produces a signal S17 as shown in Figure 7I. In this case, the delay time $\Delta t2$ of the delay circuit 45 is selected so as to satisfy the condition $\Delta t2$ is greater than tp.

Further, the delay circuit 43 produces a signal S18 in synchronism relative to the sampling pulse SP1 a predetermined time tp thereafter as shown in Figure 7J. The signal S18 is supplied to one input terminal of the AND circuit 48. Since the AND circuit 48 is supplied at the other input terminal thereof with the signal S17 which is formed as described above, the signal S17 is supplied to the AND circuit 48 as its gate signal so that in response to the signal S18, the sampling pulse Sp2 as shown in Figure 7K is produced. The sampling pulse SP2 is supplied to the sample-and-hold circuit 32.

In this way, the sampling pulse SP2 can be produced.

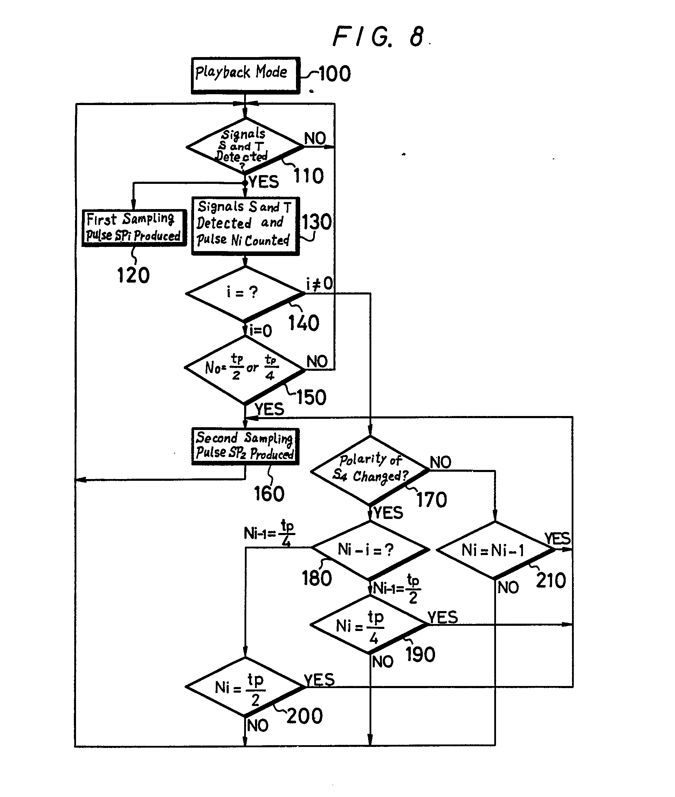

The sampling pulse SP2 can be produced by the data processing of a microcomputer (not shown), and this will now be described with reference to the flow chart of Figure 8.

When the recording apparatus is set in a playback mode at step 100, the program goes to step 110 in which the position detecting signals S and T are detected. If they are not detected, the detecting operation is repeated at step 110 until the position detecting signals S and T are detected. If the position detecting signals S and T are detected at step 110, the first sampling pulse SP1 is produced on the basis of the position detecting signals S and T at step 120 and the pulse Ni of the first sampling pulse SP1 is counted only during the detection periods of the position detecting signals S and T at step 130.

Then, the program goes to the next step 140 in which it is judged whether the detected position detecting signals S and T are those which are produced first in the playback mode or not. If they are the first ones, the program goes to step 150 in which it is judged whether the interval is the interval tp/2 or not and tp/4 or not. If the interval satisfies either of them, the program goes to step 160 in which the second sampling pulse SP2 is produced. If neither the tp/2 interval nor the tp/4 interval is satisfied at step 150, they are not the position detecting signals S and T so that the program returns to the step 110.

If at step 140 it is judged that the position detecting signals S and T are ones which are produced in the second time after the apparatus was set in the playback mode, the program goes to step 170 in which it is judged whether the polarity of the signal S4 has changed or not. If the polarity of the signal S4 has changed, the program goes to step 180 in which it is judged whether the preceding detection interval is tp/2 or tp/4. If it is tp/2, the program goes further to step 190 in which it is judged whether the interval of the present position detecting signal is tp/4 or not. If it is tp/4, the position detecting signal is the true position detecting signal so that at step 160, the second sampling pulse SP2 is produced. If on the other hand it is not tp/4, the program returns to step 110.

If it is judged that the preceding detecting interval is tp/4 at step 180, the program goes to step 200 in which it is judged whether the interval of the present position detecting signal is tp/2 or not. If it is tp/2, it is the true position detecting signal, so that the program returns to step 160 in which the second sampling pulse SP2 is produced. If on the other hand it is not tp/2, the program returns to step 110.

The operations of the steps 170 to 200 will be described in detail with reference to Figures 5B, 5E and 5F. At step 170, if it is judged that the polarity of the signal S4 is changed at the central portion of, for example, Figure 5B, the program goes to step 180 in which it is judged whether TB4 of the signal S11 shown in Figure 5F is tp/2 or not and tp/4 or not. Since it is tp/2, the program goes to step 190. At step 190, it is judged whether SA3 of the signal S10 shown in Figure 5E is tp/4 or not. Since it is tp/4, the program goes to step 160 in which the second sampling pulse SP2 is produced. At step 190, if the signal SA3 is not tp/4, the program returns to step 110.

At step 180, if TB4 is tp/4, it is judged that it is not the TB4 of the signal S11 but the signal TB6 (accordingly, the time point at which the polarity of the signal S4 is changed is not the central portion of Figure 5B but the right-hand end portion thereof), the program goes to step 200. At step 200, it is judged whether SA5 (not shown) of the signal S10 shown in Figure 5E is tp/2 or not. Since it should be tp/2, the second sampling pulse SP2 is produced at step 160. If at step 200 it is judged that the signal SA5 is not tp/2, the program returns to step 110.

If at step 170 the polarity of the signal S4 is not changed, the program goes to step 210 at which it is judged whether the detecting interval is the same as the preceding position detecting signal or not. If it is the same, the program returns to step 160 at which the second sampling pulse SP2 is produced. This will be described with reference to Figure 5E. Since, for example, the first and second pulses SA1 and SA2 of the position detecting signal S10 are the same as tp/2, the second sampling pulse SP2 is produced at step 160. Then, if, at step 210, it is judged that the detecting intervals thereof are not equal to each other, such detection is regarded as the misdetection and hence the first sampling state is maintained and the program returns to step 110.

As described above, by the signal processing of the microcomputer, it becomes possible to produce the second sampling pulse SP2.

While in the above embodiment the rotary head assembly is a special one in which the tape is wound over an angular distance less than an angular spacing of the heads thereby to carry out the recording and the reproducing, the invention can be applied to a rotary head assembly in which the tape is wrapped over an angular distance the same as the angular spacing of the heads in the ordinary way.

As set forth above, when the recorded track is traced by a rotary head, a plurality of position detecting signals which are different in frequency in adjacent tracks and different in recording length in the tracks relative to the same frequency are recorded on every predetermined track, the beginning of these position detecting signals are taken as a reference so as to form a pulse signal which detects the pilot signal, and the tracking control of the rotary head is carried out by the tracking control signal based on the detected output. Accordingly, even if the apparatus has a secular mechanical variation, a temperature change or a jitter, without being affected by these parameters, it is possible to carry out the tracking control with good precision even when the apparatus used for playback is different from that used for recording, and also it is possible to achieve compatibility between different apparatus.

Moreover, since the position detecting signals are different in frequency between the adjacent tracks, it is free of the influence of the cross-talk component and it is possible to widen a range in which the threshold level for detecting the position detecting signal is set.

Furthermore, since the position detecting signals are different in recording length between the adjacent tracks, the adjacent tracks can be discriminated from each other and it becomes possible to detect the position detecting signals in spite of a track displacement of a wide range.

In addition, since the position detecting signal for detecting the position of the tracking control pilot signal is recorded so as to begin near the centre of the adjacent pilot signals, it becomes unnecessary to provide a circuit for delaying the position detecting signal so as to place the beginning near the centre of the pilot signal, so the circuit arrangement is simplified.

**Claims**

1. A method of recording digital signals on a record medium (2) using a rotary head (1A, 1B) that periodically traces the record medium (2), the method comprising:

recording a digital information signal at first predetermined areas in a plurality of oblique tracks (5A, 5B) formed on said record medium (2) by said rotary head (1A, 1B) and forming the tracks (5A, 5B) by said rotary head (1A, 1B) with no guard bands between adjacent tracks (5A, 5B);

determining second predetermined areas proximate to the ends of the tracks (5A, 5B) and differing from said first predetermined areas;

recording a tracking pilot signal in said second predetermined areas on the tracks (5A, 5B), whereby said tracking pilot signal is available for controlling tracking alignment of a playback head (1A, 1B) during reproduction of said information signal; and

determining predetermined positions in said second areas corresponding substantially to a centre portion of said pilot signal on an adjacent track (5A, 5B);

characterized by:

recording a position detecting signal of a first frequency having first and second recording lengths alternately at said predetermined position in said second predetermined areas in every other one of the tracks (5A, 5B), and a position detecting signal of a second frequency having first and second recording lengths alternately at said predetermined position in said second predetermined area in each track (5A, 5B) not having said position detecting signal of said first frequency, said position detecting signals indicating the position of the respective said pilot signal on an adjacent track (5A, 5B).

2. A method according to claim 1 further comprising the steps of:

tracing a track (5A, 5B) recorded by said rotary head (1A, 1B) with a playback head (1A, 1B);

reproducing said pilot signal recorded at said second predetermined areas from both tracks (5A, 5B) adjacent to the track (5A, 5B) being traced;

reproducing the position detecting signal recorded at said second predetermined areas on a track (5A, 5B);

generating sampling pulses in response to said reproduced position detecting signal;

comparing levels of said reproduced pilot signals sampled by said sampling pulses from said adjacent tracks (5A, 5B);

generating a tracking signal in response to said comparison; and

controlling a tracking alignment of said playback head (5A, 5B) in response to said tracking signal.

3. A method according to claim 2 wherein said step of generating sampling pulses includes the steps of generating first sampling pulses in response to said reproduced position detecting signal, and generating second sampling pulses when a reproducing length of said reproduced position detecting signal substantially corresponds to a recording length of said position detecting signal.

4. An apparatus for recording digital signals on a record medium (2) using a rotary head (1A, 1B) that periodically traces the record medium (2), the apparatus comprising:

means for recording a digital information signal at first predetermined areas in a plurality of oblique tracks (5A, 5B) formed on said record medium (2) by said rotary head (1A, 1B) and

forming the tracks (5A, 5B) by said rotary head (1A, 1B) with no guard bands between adjacent tracks;

means for determining second predetermined areas proximate to the end of the tracks (5A, 5B) and differing from said first predetermined areas;

means for recording a tracking pilot signal in said second predetermined areas on the tracks (5A, 5B), whereby said pilot signal is available for controlling tracking alignment of a playback head (1A, 1B) during reproduction of said information signal;

means for determining predetermined positions in said second areas corresponding substantially to a centre portion of said pilot signal on an adjacent track (5A, 5B);

characterized by:

means for recording a position detecting signal of a first frequency having respective first and second recording lengths at said predetermined position in said second predetermined areas in every other of the tracks (5A, 5B) alternately, and means for recording a position detecting signal of a second frequency having respective first and second recording lengths at said predetermined position in said second predetermined areas in each track (5A, 5B) not having said position detecting signal of said first frequency, said position detecting signals indicating the position of the respective said pilot signal on an adjacent track (5A, 5B).

5. An apparatus according to claim 4 further comprising:

means including a playback head (1A, 1B) for reproducing the pilot signal recorded at said second predetermined areas from both tracks (5A, 5B) adjacent to the track (5A, 5B) being traced and for reproducing the position detecting signal recorded at said second predetermined areas on a track (5A, 5B);

means for generating sampling pulses in response to said reproduced position detecting signal;

means for comparing levels of said reproduced tracking pilot signals sampled by said sampling pulses from said adjacent tracks (5A, 5B);

means for generating a tracking signal in response to said comparison; and

means for controlling a tracking alignment of said playback head in response to said tracking signal.

6. An apparatus according to claim 5 wherein said means for generating sampling pulses includes means for generating first sampling pulses in response to said reproduced position detecting signal, and means for generating second sampling pulses when the reproducing length of said reproduced position detecting signal substantially corresponds to the recording length of said position detecting signal.

7. An apparatus for reproducing digital information signals recorded on a record medium (2) using a rotary head (1A, 1B) that periodically traces the record medium (2), the apparatus comprising:

means (1A, 1B) for reproducing a digital information signal recorded in first areas of a plurality of contiuous respective oblique tracks (5A, 5B) formed on said record medium (2) without guard bands between adjacent said oblique tracks (5A, 5B);

means (1A, 1B, 28) for reproducing a tracking pilot signal recorded in second areas proximate the ends of said respective oblique tracks (5A, 5B) and different from said first areas;

means (30, 31) for sampling said reproduced tracking pilot signal as reproduced from said tracks (5A, 5B) adjacent to said track (5A, 5B) being traced and for comparing the levels thereof;

means (32) for generating a tracking signal in response to said comparison;

means for controlling a tracking alignment of said head (1A, 1B) in response to said tracking signal;

characterized by:

means (1A, 1B, 34, 35, 40) for reproducing and discriminating between position detecting signals of a first frequency having first and second recording lengths alternately recorded at predetermined positions in said second areas corresponding substantially to a centre portion of said pilot signal on an adjacent track in every other one of the tracks (5A, 5B), and of a second frequency having first and second recording lengths alternately recorded at said predetermined position in said second predetermined area in each track (5A, 5B) not having said position detecting signal of said first frequency, said position detecting signals indicating the position of the respective said pilot signal on an adjacent track (5A, 5B); and

means (38, 39) for generating sampling pulses in response to said reproduced position detecting signals.

**Patentansprüche**

1. Verfahren zum Aufzeichnen digitaler Signale auf einem Aufzeichnungsmedium (2) unter Verwendung eines rotierenden Kopfes (1A, 1B), der das Aufzeichnungsmedium (2) periodisch abtastet,

mit folgenden Verfahrensschritten:

Aufzeichnen eines digitalen Informationssignals an ersten vorbestimmten Bereichen in einer Mehrzahl von Schrägspuren (5A, 5B), die von dem rotierenden Kopf auf dem Aufzeichnungsmedium (2) gebildet werden, wobei der rotierende Kopf (1A, 1B) diese Spuren (5A, 5B) ohne Sicherheitsstreifen zwischen benachbarten Spuren (5A, 5B) ausbildet,

Bestimmen von in der Nähe der Enden der Spuren (5A, 5B) liegenden zweiten vorbestimmten Bereichen, die von den ersten vorbestimmten Bereichen verschieden sind,

Aufzeichnen eines Pilotsignals an den zweiten vorbestimmten Bereichen der Spuren (5A, 5B) in der Weise, daß das Pilotsignal zur Steuerung der Spurausrichtung eines Wiedergabekopfes (1A, 1B) während der Wiedergabe des Informationssignals zur Verfügung steht, und

Bestimmen von vorbestimmten Positionen in den zweiten Bereichen, die im wesentlichen einem zentralen Teil des Pilotsignals auf einer benachbarten Spur (5A, 5B) entsprechen,

gekennzeichnet durch

das Aufzeichnen eines Positionsdetektorsignals mit einer ersten Frequenz an der vorbestimmten Position in den zweiten vorbestimmten Bereichen jeder zweiten Spur (5A, 5B), das abwechselnd eine erste und eine zweite Aufzeichnungslänge hat, und

das Aufzeichnen eines Positionsdetektorsignals mit einer zweiten Frequenz und abwechselnd ersten und zweiten Aufzeichnungslängen an der genannten vorbestimmten Position in dem zweiten Bereich aller Spuren (5A, 5B), die nicht das Positionsdetektorsignal mit der ersten Frequenz aufweisen,

wobei diese Positionsdetektorsignale die Position des jeweiligen Pilotsignals auf einer benachbarten Spur (5A, 5B) angeben.

2. Verfahren nach Anspruch 1, mit den weiteren Verfahrensschritten;

Abtasten einer von dem rotierenden Kopf (1A, 1B) aufgezeichneten Spur (5A, 5B) mit einem Wiedergabekopf (1A, 1B),

Wiedergabe des an den zweiten vorbestimmten Bereichen aufgezeichneten Pilotsignals von den beiden die der abgetasteten Spur (5A, 5B) benachbarten Spuren (5A, 5B),

Wiedergabe des Positionsdetektorsignals, das an den zweiten vorbestimmten Bereichen in jeder Spur (5A, 5B) aufgezeichnet ist,

Erzeugen von Abtastimpulsen in Abhängigkeit von dem wiedergegebenen Positionsdetektorsignal,

Vergleichen der Pegel der wiedergegebenen und durch die Abtastimpulse von den benachbarten Spuren (5A, 5B) abgetasteten Pilotsignalen,

Erzeugen eines Spurführungssignals in Abhängigkeit von dem Vergleich, und

Steuern der Spurausrichtung des Wiedergabekopfes (1A, 1B) nach Maßgabe des Spurführungssignals.

3. Verfahren nach Anspruch 2, bei dem der Verfahrensschritt des Erzeugens von Abtastimpulsen die Verfahrensschritte beinhaltet, daß erste Abtastimpulse in Abhängigkeit von dem wiedergegebenen Positionsdetektorsignal erzeugt werden, und daß zweite Abtastimpulse erzeugt werden, wenn die Wiedergabelänge des wiedergegebenen Positionsdetektorsignals im wesentlichen der Aufzeichnungslänge des Positionsdetektorsignals entspricht.

4. Gerät zum Aufzeichnen digitaler Signale auf einem Aufzeichnungsmedium (2) unter Verwendung eines rotierenden Kopfes (1A, 1B), der das Aufzeichnungsmedium (2) periodisch abtastet,

mit Mitteln zum Aufzeichnen eines digitalen Informationssignals an ersten vorbestimmten Bereichen in einer Mehrzahl von Schrägspuren (5A, 5B), die von dem rotierenden Kopf auf dem Aufzeichnungsmedium (2) gebildet werden, wobei der rotierende Kopf (1A, 1B) diese Spuren (5A, 5B) ohne Sicherheitsstreifen zwischen benachbarten Spuren (5A, 5B) ausbildet,

mit Mitteln zum Bestimmen von in der Nähe der Enden der Spuren (5A, 5B) liegenden zweiten vorbestimmten Bereichen, die von den ersten vorbestimmten Bereichen abweichen,

mit Mitteln zum Aufzeichnen eines Pilotsignals an den zweiten vorbestimmten Bereichen der Spuren (5A, 5B) in der Weise, daß das Pilotsignal zur Steuerung der Spurausrichtung eines Wiedergabekopfes (1A, 1B) während der Wiedergabe des Informationssignals zur Verfügung steht, und

mit Mitteln zum Bestimmen vorbestimmter Positionen in den zweiten Bereichen, die im wesentlichen einem zentralen Teil des pilotsignals auf einer benachbarten Spur (5A, 5B) entsprechen,

gekennzeichnet durch

Mittel zum Aufzeichnen eines Positionsdetektorsignals mit einer ersten Frequenz an der vorbestimmten Position in den zweiten vorbestimmten Bereichen jeder zweiten Spur (5A, 5B), das abwechselnd eine erste und eine zweite Aufzeichnungslänge hat, und

Mittel zum Aufzeichnen eines Positionsdetektorsignals mit einer zweiten Frequenz und abwechselnd ersten und zweiten Aufzeichnungslängen an der genannten vorbestimmten Position in dem zweiten Bereich aller Spuren (5A, 5B), die nicht das Positionsdetektorsignal mit der ersten aufweisen,

wobei diese Positionsdetektorsignale die Position des jeweiligen Pilotsignals auf einer benachbarten Spur (5A, 5B) angeben.

5. Gerät nach Anspruch 4, umfassend

Mittel mit einem 'Wiedergabekopf (1A, 1B) zur Wiedergabe des an den zweiten vorbestimmten Bereichen aufgezeichneten Pilotsignals von beiden Spuren (5A, 5B), die der gerade abgetasteten Spur (5A, 5B) benachbart sind, und zur Wiedergabe des Positionsdetektorsignals, das an den zweiten vorbestimmten Bereichen in jeder Spur (5A, 5B) aufgezeichnet ist,

Mittel zum Erzeugen von Abtastimpulsen in Abhängigkeit von dem wiedergegebenen Positionsdetektorsignal,

Mittel zum Vergleichen der Pegel der wiedergegebenen und durch. die Abtastimpulse von den benachbarten Spuren (5A, 5B) abgetasteten Pilotsignalen,

Mittel zum Erzeugen eines Spurführungssignals in Abhängigkeit von dem Vergleich, und

Mittel zum Steuern der Spurausrichtung des Wiedergabekopfes (1A, 1B) nach Maßgabe des Spurführungssignals.

6. Gerät nach Anspruch 5, bei dem die Mittel zum Erzeugen der Abtastimpulse Mittel enthalten zum Erzeugen erster Abtastimpulse in Abhängigkeit von dem wiedergegebenen Pilotsignal sowie Mittel zum Erzeugen zweiter Abtastimpulse, wenn die Wiedergabelänge des wiedergegebenen Positionsdetektorsignals im wesentlichen der Aufzeichnungslänge des Positionsdetektorsignals entspricht.

7. Gerät zur Wiedergabe von auf einem Aufzeichnungsmedium (2) aufgezeichneten digitalen Informationssignalen unter Verwendung eines rotierenden Kopfes (1A, 1B), der das Aufzeichnungsmedium (2) periodisch abtastet,

mit Mitteln (1A, 1B) zur Wiedergabe eines digitalen Informationssignals, das in ersten Bereichen einer Mehrzahl von aneinandergerenzenden Schrägspuren (5A, 5B) aufgezeichnet ist, die auf dem Aufzeichnungsmedium (2) ohne Sicherheitsstreifen zwischen benachbarten Schrägspuren (5A, 5B) gebildet sind,

mit Mitteln (1A, 1B, 28) zur Wiedergabe eines Spurführungs pilotsignals, das in zweiten, in der Nähe der Enden der betreffenden Schrägspuren (5A, 5B) liegenden und von den ersten Bereichen abweichenden Bereichen aufgezeichnet ist,

mit Mitteln (30, 31) zum Abtasten des wiedergegebenen Spurführungs-Pilotsignals, das von den der gerade abgetasteten Spur (5A, 5B) benachbarten Spuren (5A, 5B) wiedergegeben wird, und zum Vergleichen der Pegel dieser Pilotsignale,

mit Mitteln (32) zum Erzeugen eines Spurführungssignals in Abhängigkeit von dem Vergleich,

sowie mit Mitteln zur Steuerung der Spurausrichtung des genannten Kopfes (1A, 1B) nach Maßgabe des Spurführungssignals,

gekennzeichnet durch

Mittel (1A, 1B, 34, 35, 40) zur Wiedergabe und Diskriminierung von

Positionsdetektorsignalen mit einer ersten Frequenz und ersten und zweiten Aufzeichnungslängen, die abwechselnd an vorbestimmten Positionen in den genannten zweiten Bereichen aufgezeichnet sind, die im wesentlichen einem zentralen Teil des Pilotsignals auf einer benachbarten Spur entsprechen, und von

Positionsdetektorsignalen mit einer zweiten Frequenz und ersten und zweiten Aufzeichnungslängen, die abwechselnd an den genannten vorbestimmten Positionen in den genannten zweiten Bereichen jeder Spur (5A, 5B) aufgezeichnet sind, in denen nicht das Positionsdetektorsignal mit der ersten Frequenz aufgezeichnet ist, wobei diese Positionsdetektorsignale die Position des jeweiligen Pilotsignals auf einer benachbarten Spur (5A, 5B) angeben, und

Mittel (38, 39) zum Erzeugen von Abtastimpulsen in Abhängigkeit von den wiedergegebenen Positionsdetektorsignalen.

**Revendications**

1. Procédé pour enregistrer des signaux numériques sur un support d'enregistrement (2) en mettant en oeuvre une tête tournante (1A, 1B) qui analyse périodiquement le support d'enregistrement (2), le procédé consistant à:

enregistrer un signal d'information numérique à des premières zones prédéterminées d'un ensemble de pistes obliques (5A, 5B) formées sur le support d'enregistrement (2) par la tête tournante (1A, 1B) et former les pistes (5A, 5B) par la tête tournante (1A, 1B) sans bandes de garde entre les pistes voisines (5A, 5B);

déterminer des deuxièmes zones prédéterminées à proximité des extrémités des pistes (5A, 5B) et différant des premières zones prédéterminées;

enregistrer un signal pilote de centrage dans les deuxièmes zones prédéterminées sur les pistes (5A, 5B), le signal pilote de centrage étant ainsi disponible pour commander l'alignement de centrage d'une tête de lecture (1A, 1B) pendant la reproduction du signal d'information; et à

déterminer des positions prédéterminées dans les deuxièmes zones correspondant effectivement à une partie centrale du signal pilote sur une piste voisine (5A, 5B); caractérisé en ce qu'il consiste à:

enregistrer un signal de détection de position d'une première fréquence ayant des première et deuxième longueurs d'enregistrement alternativement à la position prédéterminée dans les deuxièmes zones prédéterminées de chacune des autres pistes (5A, 5B), et un signal de détection de position d'une deuxième fréquence ayant des première et deuxième longueurs d'enregistrement alternativement à la position prédéterminée dans la deuxième zone prédéterminée de chaque piste (5A, 5B) ne comportant pas le signal de détection de position de la première fréquence, les signaux de détection de position indiquant la position du signal pilote respectif sur une piste, voisine (5A, 5B).

2. Procédé selon la revendication 1, comprenant en outre les opérations qui consistent à:

analyser une piste (5A, 5B) enregistrée par la tête tournante (1A, 1B) avec une tête de lecture (1A, 1B);

reproduire le signal pilote enregistré dans les deuxièmes zones prédéterminées à partir des deux pistes (5A, 5B) voisines de la piste (5A, 5B) qui est analysée;

reproduire le signal de détection de position enregistré dans les deuxièmes zones prédéterminées sur une piste (5A, 5B);

engendrer des impulsions d'échantillonnage en réponse au signal de détection de position reproduit;

comparer les niveaux des signaux pilotes reproduits échantillonnés par les impulsions d'échantillonnage provenant des pistes voisines (5A, 5B);

engendrer un signal de centrage en réponse à la comparaison; et

commander un alignement de centrage de la tête de lecture (5A, 5B) en réponse au signal de centrage.

3. Procédé selon la revendication 2, dans lequel l'opération de génération d'impulsions d'échantillonnage comprend les opérations consistant à engendrer des premières impulsions d'échantillonnage en réponse au signal de détection de position reproduit, et à engendrer des deuxièmes impulsions d'échantillonnage quand la longueur de reproduction du signal de détection de position reproduit correspondant effectivement à la longueur d'enregistrement du signal de détection de position.

4. Dispositif pour enregistrer des signaux numériques sur un support d'enregistrement (2) en mettant en oeuvre une tête tournante (1A, 1B) qui analyse périodiquement le support d'enregistrement (2), le dispositif comprenant:

un moyen pour enregistrer un signal d'information numérique à des premières zones prédéterminées d'un, ensemble de pistes obliques (5A, 5B) formées sur le support d'enregistrement (2) par la tête tournante (1A, 1B) et former les pistes (5A, 5B) par la tête tournante (1A, 1B) sans bandes de garde entre les pistes voisines;

un moyen pour déterminer des deuxièmes zones prédéterminées à proximité de l'extrémité des pistes (5A, 5B) et différant des premières zones prédéterminées;

un moyen pour enregistrer un signal pilote de centrage dans les deuxièmes zones prédéterminées sur les pistes (5A, 5B), le signal pilote étant ainsi disponible pour commander l'alignement de centrage d'une tête de lecture (1A, 1B) pendant la reproduction du signal d'information;

un moyen pour déterminer des positions prédéterminées dans les deuxièmes zones correspondant effectivement à une partie centrale du signal pilote sur une piste voisine (5A, 5B); caractérisé par:

un moyen pour enregistrer un signal de détection de position d'une première fréquence ayant des première et deuxième longueurs d'enregistrement respectives à la position prédéterminée dans les deuxièmes zones prédéterminées de chacune des autres pistes (5A, 5B) alternativement, et

un moyen pour enregistrer un signal de détection de position d'une deuxième fréquence ayant des première et deuxième longueurs d'enregistrement à la position prédéterminée dans les deuxièmes zones prédéterminées de chaque piste (5A, 5B) ne comportant pas le signal de détection de position de la première fréquence, les signaux de détection de position indiquant la position du signal pilote respectif sur une piste voisine (5A, 5B).

5. Dispositif selon la revendication 4, comprenant en outre:

un moyen incluant une tête de lecture (1A, 1B) pour reproduire le signal pilote enregistré dans les deuxièmes zones prédéterminées des deux pistes (5A, 5B) voisines de la piste (5A, 5B) qui est analysée et pour reproduire le signal de détection de position enregistré dans les deuxièmes zones prédéterminées d'une piste (5A, 5B);

un moyen pour engendrer des impulsions d'échantillonnage en réponse au signal de détection de position reproduit;

un moyen pour comparer les niveaux des signaux pilotes de centrage reproduits qui sont échantillonnés par les impulsions d'échantillonnage provenant des pistes voisines (5A, 5B);

un moyen pour engendrer un signal de centrage en réponse à la comparaison; et

un moyen pour commander un alignement de centrage de la tête de lecture en réponse au signal de centrage.

6. Dispositif selon la revendication 5, dans lequel le moyen pour engendrer des impulsions d'échantillonnage comprend un moyen pour engendrer des premières impulsions d'échantillonnage en réponse au signal de détection de position reproduit, et un moyen pour engendrer des deuxièmes impulsions d'échantillonnage quand la longueur de reproduction du signal de détection de position reproduit correspond effectivement à la longueur d'enregistrement du signal de détection de position.

7. Dispositif pour reproduire des signaux d'information numériques enregistrés sur un support d'enregistrement (2) en mettant en oeuvre une tête tournante (1A, 1B) qui analyse périodiquement le support d'enregistrement (2), le dispositif comprenant:

un moyen (1A, 1B) pour reproduire un signal d'information numérique enregistré dans des premières zones d'un ensemble de pistes obliques respectives contingües (5A, 5B) formées sur le support d'enregistrement (2) sans bandes de garde entre les pistes obliques voisines (5A, 5B);

un moyen (1A, 1B, 28) pour reproduire un signal pilotede centrage enregistré dans les deuxièmes zones à proximité des extrémités des pistes obliques respectives (5A, 5B) et différentes des premières zones;

un moyen (30, 31) pour échantillonner le signal pilote de centrage reproduit tel que reproduit à partir des pistes (5A, 5B) voisines de la piste (5A, 5B) qui est analysée et pour comparer leurs niveaux;

un moyen (32) pour engendrer un signal de centrage en réponse à la comparaison;

un moyen pour commander un alignement de centrage de la tête (1A, 1B) en réponse au signal de centrage; caractérisé par:

un moyen (1A, 1B, 34, 35, 40) pour reproduire et faire une discrimination entre les signaux de détection de position d'une première fréquence ayant des première et deuxième longueurs d'enregistrement alternativement enregistrés à des positions prédéterminées dans les deuxièmes zones correspondant effectivement à une partie centrale du signal pilote sur une piste voisine de chacune des autres pistes (5A, 5B), et d'une deuxième fréquence ayant des première et deuxième longueurs d'enregistrement alternativement enregistrés à la position prédéterminée dans la deuxième zone prédéterminée de chaque piste (5A, 5B) ne comportant pas le signal de détection de position de la première fréquence, les signaux de détection de position indiquant la position du signal pilote respectif sur une piste voisine (5A, 5B); et

un moyen (38, 39) pour engendrer des impulsions d'échantillonnage en réponse aux signaux de détection de position reproduits.

FIG. 1

FIG. 2

FIG. 3

FIG. 4A (S1)
FIG. 4B
FIG. 4C (S4)
FIG. 4D (S2)
FIG. 4E (S3)
FIG. 4F (S5)
FIG. 4G (S6)
FIG. 4H (S7)
FIG. 4I (S8)
FIG. 4J (S9)

EP 0 171 266 B1

$t_A$  $t_B$  $t_A$  $t_B$

FIG. 5A (Si')

FIG. 5B (S4)

FIG. 5C (SR)

FIG. 5D (SF)

$P_{A1}$ $P_{B3}$ $P_{B1}$ $P_{B4}$ $P_{A2}$ $P_{B2}$ $P_{A1}$ $P_{A3}$ $P_{A3}$ $P_{B3}$ $P_{B5}$ $P_{A3}$ $P_{B4}$ $P_{A4}$ $P_{A2}$ $P_{B6}$ $P_{B4}$ $P_{A4}$ $P_{A3}$ $P_{A5}$ $P_{B5}$ $P_{A4}$ $P_{A6}$ $P_{B6}$

FIG. 5E (S10)

$S_{A1}$ $t_P$ $S_{A2}$ $\frac{1}{2}t_P$ $S_{A3}$ $\frac{1}{4}t_P$ $S_{A4}$

FIG. 5F (S11)

$T_{B3}$ $T_{B4}$ $T_{B5}$ $T_{B6}$

FIG. 5G (SP1)

FIG. 5H (SP2)

## FIG. 6

5

FIG. 7A (S1')

FIG. 7B (S4)

FIG. 7C (S12)

FIG. 7D (S13)

FIG. 7E (S14)

FIG. 7F (S15)

FIG. 7G (S16)

FIG. 7H (SP1)

FIG. 7I (S17)

FIG. 7J (S18)

FIG. 7K (SP2)

## FIG. 8.

Playback Mode ~100

Signals S and T Detected? — NO / YES 110

First Sampling Pulse SPi Produced 120

Signals S and T Detected and Pulse Ni Counted 130

i = ? — i ≠ 0 / i=0 140

$N_0 = \frac{tp}{2}$ or $\frac{tp}{4}$ — NO / YES 150

Second Sampling Pulse SP₂ Produced 160

Polarity of S₄ Changed? — NO / YES 170

$N_{i-1} = \frac{tp}{4}$

Ni – i = ? 180 — $N_{i-1} = \frac{tp}{2}$

Ni = Ni–1 — YES / NO 210

$Ni = \frac{tp}{4}$ — YES / NO 190

$Ni = \frac{tp}{2}$ — YES / NO 200